(19) Europäisches Patentamt
European Patent Office
Office européen des brevets

(11) **EP 2 241 874 A1**

(12) **EUROPÄISCHE PATENTANMELDUNG**

(43) Veröffentlichungstag:
**20.10.2010 Patentblatt 2010/42**

(51) Int Cl.:
***G01N 5/04*** *(2006.01)*

(21) Anmeldenummer: **09158085.2**

(22) Anmeldetag: **16.04.2009**

| | |
|---|---|
| (84) Benannte Vertragsstaaten:<br>**AT BE BG CH CY CZ DE DK EE ES FI FR GB GR**<br>**HR HU IE IS IT LI LT LU LV MC MK MT NL NO PL**<br>**PT RO SE SI SK TR**<br><br>(71) Anmelder: **Mettler-Toledo AG**<br>**8606 Greifensee (CH)** | (72) Erfinder:<br>• **Steinrisser, Markus**<br>**8606, Greifensee (CH)**<br>• **Vogt, Helen**<br>**8606, Greifensee (CH)**<br>• **Boerger, Claas**<br>**8606, Greifensee (CH)**<br>• **Gössi, Dominik**<br>**8606, Greifensee (CH)** |

(54) **Verfahren und Probe zum Überprüfen eines Messgerätes zur gravimetrischen Feuchtigkeitsbestimmung**

(57) Verfahren zur Überprüfung eines Messgeräts (10), zur gravimetrischen Feuchtigkeitsbestimmung, wobei das Messgerät (10) einen Prüfraum (30), eine Wägevorrichtung (40) mit einer Probeaufnahme (60) zur Bestimmung der Masse der Probe (62), die sich in Messstellung im Prüfraum (30) befindet und mindestens ein Mittel zur Erwärmung (31) der auf der Probenaufnahme (60) auflegbaren Probe aufweist, wobei das Verfahren die folgenden Schritte aufweist: Aufbringen einer Testprobe (62) auf die Probenaufnahme (60), Bestimmung der Ausgangsmasse $m_0$ der Testprobe (62), Erhitzen des Prüfraums (30) mittels eines vordefinierten Temperaturprofils, Messung der Masse $m_1$ der Testprobe mit Hilfe der Wägevorrichtung (40) nachdem die Testprobe (62) mittels eines vordefinierten Temperaturprofils erhitzt wurde, Vergleich der gemessenen Masse $m_1$ mit dem Referenzwert der Masse $m_*$ und Ausgabe eines zum Resultat des Vergleichs korrespondierenden Signals.

FIG. 1

EP 2 241 874 A1

**Beschreibung**

Die vorliegende Erfindung betrifft ein Verfahren zum Überprüfen eines Messgeräts zur gravimetrischen Feuchtigkeitsbestimmung, sowie eine dazu geeignete Testprobe. Unter Feuchtigkeit wird dabei das Vorhandensein von unter Temperatureinfluss volatilen Stoffen, wie beispielsweise Wasser oder anderen Flüssigkeiten, in einer anderen Substanz verstanden.

Zur Bestimmung des Feuchtigkeitsgehaltes einer Probe wird diese getrocknet und das Gewicht vor und nach dem Trocknungsvorgang bestimmt.

Gegebenenfalls kann der Gewichtsverlust auch während des Trocknungsvorganges gemessen werden. Dabei nimmt bei einer Probe in Abhängigkeit von der Temperatur, der Trocknungszeit und den Prüfraumbedingungen deren Gewichtswert ab, wobei der Gewichtswert einer Gewicht-Zeitkurve folgt, die sich asymptotisch dem Trockengewicht der Probe annähert. Um zu überprüfen ob die Feuchtigkeit einer Probe einem vordefinierten Sollwert entspricht, wird die Gewichts-Zeitkurve der Probe ermittelt. Anschliessend wird die auf diese Weise ermittelte Gewichts-Zeitkurve mit einer aus Vergleichsversuchen ermittelten Vergleichskurve verglichen. Die Vergleichskurve basiert auf einer Gewichts-Zeitkurve, die durch eine Probe, deren Feuchtigkeit dem Sollwert entspricht, erhalten wurde. Falls die ermittelte Gewichts-Zeitkurve und die Vergleichskurve innerhalb vordefinierter Toleranzen übereinstimmen, entspricht die Feuchtigkeit der Probe, innerhalb des vordefinierten Toleranzwertes, dem Sollwert.

Aufgrund der zur Verfügung stehenden elektronischen Mittel kann ein entsprechend ausgerüstetes Messgerät zur gravimetrischen Feuchtigkeitsbestimmung den Feuchtigkeitsgehalt einer Probe anhand der gemessen Kurvenparameter und der Trocknungszeit errechnen und auf einer Anzeigeeinheit anzeigen. Durch diese Methode muss das zu trocknende Gut nicht mehr vollständig durchgetrocknet sein, es genügt die Ermittlung der Koordinaten zweier Erfassungspunkte im Gewicht-Zeitdiagramm.

Der Trocknungsvorgang, bei dem das zu trocknende Gut nicht vollständig durchgetrocknet wird, kann während einer vordefinierten konstanten Trocknungszeit $\Delta t$ erfolgen. Alternativ kann der Trocknungsvorgang so lange durchgeführt werden, bis die Massenänderung pro Zeiteinheit $\dot{m}$ während des Trocknungsvorgangs einen vordefinierten Schwellwert $a$ unterschreitet, wobei die Trocknungszeit $\Delta t$ für den Trocknungsvorgang nicht zwingend konstant ist.

Wie bereits eingangs erwähnt, verändert sich das Gewicht einer Probe während des Trocknungsvorgangs im Wesentlichen in Abhängigkeit von der Temperatur, der Trocknungszeit und den Prüfraumbedingungen. Als Prüfraum wird ein durch das Gehäuse des Messgerätes umschlossener, zwecks Einführung beziehungsweise Entfernung einer Probe öffenbarer Raum bezeichnet. Im Inneren des Prüfraums sind zudem eine Probeaufnahme und ein Mittel zur Erwärmung der Probe angeordnet. Die Probeaufnahme ist mit einem gravimetrischen Messgerät verbunden.

Üblicherweise wird eine dünne Schicht der Probe auf eine ebene Probeaufnahme, beispielsweise eine Probeschale aufgebracht. Die Schale wird im Messgerät zur gravimetrischen Feuchtigkeitsbestimmung in ihrer flächigen Ausdehnung vorzugsweise horizontal und parallel zur flächigen Ausdehnung des Mittels zur Erwärmung der Probe angeordnet, um eine gleichmässige Erwärmung der Probe zu ermöglichen.

Als Mittel zur Erwärmung der Probe werden verschiedene Strahlungsquellen wie Heizstrahler, Keramikstrahler, Halogen- und Quarzlampen verwendet. Auch die Verwendung von Mikrowellengeneratoren ist als Strahlungsquelle möglich.

Ein Messgerät zur gravimetrischen Feuchtigkeitsbestimmung der genannten Gattung ist beispielsweise aus der europäischen Patentschrift EP 0 611 956 B1 bekannt. Bei diesem Gerät erfolgt die Beschickung der Probenaufnahme ausserhalb des Messgerätes zur gravimetrischen Feuchtigkeitsbestimmung. Dazu wird die Wägevorrichtung zusammen mit der Probenaufnahme auf einem schubladenförmigen Auszug aus dem Messgerätgehäuse herausgefahren. Als Strahlungsquelle wird eine ringförmige Halogenlampe eingesetzt, welche im Betriebszustand oberhalb der Probeaufnahme angeordnet ist.

Ein weiteres Messgerät ist aus der europäischen Patentanmeldung EP 1 850 110 A1 bekannt. Bei diesem Gerät werden zwei Strahlungsquellen eingesetzt, wobei die Probenaufnahme in Messstellung zwischen der ersten und der zweiten Strahlungsquelle angeordnet ist.

Um sicher zu stellen, dass das Messgerät zur gravimetrischen

Feuchtigkeitsbestimmung genau arbeitet, muss es regelmässig überprüft und gegebenenfalls justiert und/oder kalibriert werden. Eine Möglichkeit besteht darin die Wägevorrichtung und die Strahlungsquelle getrennt voneinander zu überprüfen. Für die Überprüfung der Wägevorrichtung kann eine bekannte Referenzmasse auf den Massensensor aufgebracht werden. Weicht die vom Messgerät angezeigte Masse zu stark von der Referenzmasse ab, so muss der Massensensor neu justiert werden. Für die Überprüfung der Strahlungsquelle kann an Stelle der Probe ein Referenztemperatursensor in das Messgerät eingebracht werden. Anschliessend wird das Messgerät auf eine vordefinierte Referenztemperatur erhitzt. Weicht die vom Messgerät angezeigte Temperatur zu stark von der Referenztemperatur ab, so muss die Strahlungsquelle neu justiert werden. Referenztemperatursensoren sind beispielsweise aus DE 100 24 015 C2 bekannt.

Besonders die Überprüfung der Strahlungsquelle ist zeitintensiv, da der Referenztemperatursensor zur Verbesserung der Genauigkeit in das kalte Messgerät eingebracht werden muss. Unter kaltem Messgerät wird dabei ein Messgerät bei Raumtemperatur bei ca. $20°C$ verstanden. Ausserdem muss abgewartet werden, bis ein stabiler Zustand erreicht wird und der Referenztemperatursensor keine Temperaturschwankungen anzeigt, was zeitaufwändig ist. Um die Zuverlässigkeit der Strahlungsquelle sicher zu stellen wird zudem empfohlen diese Überprüfung bei mehr als nur einer Referenztemperatur durchzuführen. Aus diesem Grund ist die Überprüfung aufwändig und wird deshalb vom Benutzer oft nur sporadisch durchgeführt, was zwischenzeitlich zu Unsicherheiten der Messgenauigkeit führen kann.

Bei einem weiteren, jedoch auch aufwändigen Analyseverfahren, wird mit Hilfe einer Karl-Fischer Titration die Feuchtigkeit einer Prüfsubstanz bestimmt. Anschliessend wird aus der Prüfsubstanz eine Vergleichsprobe entnommen und die Feuchtigkeit der Vergleichsprobe mit Hilfe des Messgeräts bestimmt. Liefert das Messgerät im Rahmen von zulässigen Fehlertoleranzen ein hinreichend genaues Ergebnis, so muss das Messgerät nicht neu justiert bzw. kalibriert werden. Liegt jedoch das Ergebnis ausserhalb der zulässigen Fehlertoleranzen, muss eine Justierung und/oder Kalibrierung des Messgeräts durchgeführt werden.

Auch bei diesem Analyseverfahren ist es problematisch, dass die Bestimmung der Feuchtigkeit der Prüfsubstanz mit Karl-Fischer Titration aufwändig ist und deshalb vom Benutzer oft nur sporadisch durchgeführt wird, was ebenfalls zwischenzeitlich zu Unsicherheiten der Messgenauigkeit führen kann.

Es ist deshalb Aufgabe der Erfindung ein Verfahren zur Überprüfung eines Messgeräts zur gravimetrischen Feuchtigkeitsbestimmung, sowie eine dazu geeignete Testprobe zur Verfügung zu stellen, wodurch eine möglichst einfache und genaue Überprüfung des Messgeräts ermöglicht wird.

Diese Aufgabe wird mit einem Verfahren und einer dazu geeigneten Testprobe, welche die in den unabhängigen Patentansprüchen angegebenen Merkmale aufweisen, gelöst. Weitere vorteilhafte Ausführungsformen können den abhängigen Ansprüchen entnommen werden.

Das erfindungsgemässe Verfahren zur Überprüfung eines Messgeräts zur gravimetrischen Feuchtigkeitsbestimmung, wobei das Messgerät einen Prüfraum, eine Wägevorrichtung mit einer Probeaufnahme zur Bestimmung der Masse der Probe, die sich in Messstellung im Prüfraum befindet und mindestens ein Mittel zur Erwärmung der auf der Probenaufnahme auflegbaren Probe aufweist, besteht aus folgenden Schritten:

- Aufbringen einer Testprobe auf die Probenaufnahme,

- Bestimmung der Ausgangsmasse $m_0$ der Testprobe,

- Erhitzen des Prüfraums (30) mittels eines vordefinierten Temperaturprofils,

- Messung der Masse $m_1$ der Testprobe mit Hilfe der Wägevorrichtung nachdem die Testprobe mittels des vordefinierten Temperaturprofils erhitzt wurde,

- Vergleich der gemessenen Masse $m_1$ mit einem Referenzwert der Masse $m_*$ und

- Ausgabe eines zum Resultat des Vergleichs korrespondierenden Signals.

Dabei kann die Ausgangsmasse $m_0$ der Testprobe und die Masse $m_1$ nach dem Erhitzen des Prüfraums mittels des vordefinierten Temperaturprofils durch die Wägevorrichtung des Messgeräts bestimmt werden. Alternativ kann die Ausgangsmasse $m_0$ auch auf eine andere Weise ermittelt werden. Beispielsweise kann die Ausgangsmasse $m_0$ ausserhalb des Messgeräts zur Feuchtigkeitsbestimmung mit Hilfe einer Waage bestimmt werden und die auf diese Weise bestimmte Masse kann entweder elektronisch an das Messgerät übermittelt oder vom Benutzer eingegeben werden.

Anstelle der Absolutmassen $m_0$, $m_1$ und $m_*$ können auch die prozentualen Massenänderungen betrachtet werden. Dazu können beispielsweise die betrachteten Massen mit der Ausgangsmasse $m_0$ normiert sein.

Vorzugsweise beinhaltet das vordefinierte Temperaturprofil Erhitzen des Prüfraums auf eine vordefinierte Zieltemperatur $T_1$ und Halten dieser Zieltemperatur $T_1$ entweder während eines vordefinierten Zeitintervalls $\Delta t$ oder bis die Massenänderung pro Zeiteinheit $\dot{m}$ einen vordefinierten Wert $a$ unterschreitet, d.h. es gilt $\dot{m} \leq a$.

Die Ausgabe eines zum Resultat des Vergleichs korrespondierenden Signals, kann beispielsweise ein Alarmsignal sein, das ausgegeben wird falls die Differenz aus dem Referenzwert der Masse $m_*$ und der gemessenen Masse $m_1$ grösser als eine vordefinierte Toleranz ist. Als Alarmsignal kann beispielsweise eine optische Anzeige, ein Ausdruck auf Papier, ein akustisches Signal oder elektronisches Signal, das an ein anderes Gerät übermittelt wird, verstanden werden.

Anstelle der Ausgabe des Alarmsignals kann die gemessene Masse $m_1$ auch vom Benutzer abgelesen werden und mit dem Referenzwert $m_*$ verglichen werden. Dieser manuelle Vergleich birgt jedoch den Nachteil, dass er für den Benutzer aufwändiger und fehleranfälliger ist.

In bevorzugter Weiterbildung kann der Testprobe ein Informationsträger zugeordnet werden, dessen gespeicherte Daten an das Messgerät übermittelt werden können. Die gespeicherten Daten können beispielsweise die Ausgangsmasse $m_0$ und/oder den Referenzwert der Masse $m_*$ enthalten. Als Informationsträger können dabei Barcodes, Matrixcode, Mikrochips, Radio Frequenz Identifikations (RFID) Marken und dergleichen verwendet werden.

Das erfindungsgemässe Verfahren hat den Vorteil, dass nicht nur der Massensensor und das Mittel zur Erwärmung gleichzeitig überprüft werden können. Vielmehr kann eine Aussage über die Genauigkeit der gesamten Prüfanordnung getroffen werden. Beispielsweise haben Versuche gezeigt, dass bereits kleine Änderungen des Prüfraums, wie beispielsweise die Luftzirkulation im Prüfraum,

einen erheblichen Einfluss auf des Messergebnis haben können. Solche Änderungen werden vom erfindungsgemässen Verfahren miterfasst, indem die gemessenen Masse $m_1$ sich von dem Referenzwert der Masse $m_*$ unterscheidet.

Idealerweise wird bei dem erfindungsgemässen Verfahren eine Testprobe mit bekannter Ausgangsmasse $m_0$ verwendet. Beispielsweise könnte eine Substanz als Prüfsubstanz in der Testprobe verwendet werden, für die das Messgerät zur gravimetrischen Feuchtigkeitsbestimmung auch sonst standardmässig eingesetzt wird. Ein Problem dabei ist, dass das Messgerät hauptsächlich für die Bestimmung der Feuchtigkeit von Stoffen verwendet wird, die sich mit der Zeit und auf Grund von Temperaturschwankungen während der Lagerung verändern. Typische Anwendungen sind die Bestimmung der Feuchtigkeit von Lebensmitteln, wie z.B. Milchpulver, Kaffee, Schokolade, Maisstärke oder Mehl. Diese Stoffe können sich in Abhängigkeit von Umgebungseinflüssen und Zeit verändern. Es ist deshalb nicht möglich aus diesen Stoffen eine Vergleichsprobe herzustellen, über längere Zeit zu lagern und anschliessend für eine Überprüfung des Messgeräts zu verwenden. Selbst wenn diese Probleme gelöst werden könnten, weisen diese Stoffe oft den Nachteil auf, dass die Massenänderung in Abhängigkeit vom Temperaturprofil zu klein ist und somit keine hinreichend genaue Aussage über die Genauigkeit des Messgeräts getroffen werden kann.

Die Prüfsubstanz sollte unter üblichen Lagerbedingungen vorzugsweise über einen grösseren Zeitraum chemisch und physikalisch stabil sein, so dass die Prüfsubstanz lagerfähig ist. Eine zur Überprüfung von Messgeräten verwendete und empfohlene Prüfsubstanz ist Natriumtartrat-Dihydrat, ein Salz mit gebundenem Kristallwasser, welches sich unter Wärmeeinfluss abspaltet. Die Kristallwasser-Abspaltung endet bei einem Temperaturschwellwert $T_S$ von ca. 150˚C. Eine Zieltemperatur, die grösser als dieser Temperaturschwellwert $T_S$ ist, führt demzufolge zu einer nahezu gleichen Masse. Daher ist Natriumtartrat-Dihydrat für eine präzise Überprüfung des Messgeräts oberhalb des Temperaturschwellwertes $T_S$ ungeeignet. Auch für die Verwendung unterhalb des Temperaturschwellwertes $T_S$ ist Natriumtartrat-Dihydrat ungeeignet, da in diesem Bereich der Masse-Temperaturverlauf nicht ausreichend genau reproduzierbar ist, d.h. für jede Probe anders ausfällt. Daher ist Natriumtartrat-Dihydrat für eine präzise Überprüfung des Messgeräts unterhalb des Temperaturschwellwerts $T_S$ ebenfalls ungeeignet.

Dieses Problem wird umgangen, indem die in der Testprobe enthaltene Prüfsubstanz in einem Temperaturintervall um die Zieltemperatur $T_1$ einen reproduzierbaren Temperatur-Masseverlauf aufweist.

Ausserdem ist das Material der erfindungsgemässen Testprobe so gewählt, dass die Massenänderung in Abhängigkeit von der Zieltemperatur $T_1$ genügend gross ist, um der Zieltemperatur $T_1$ eindeutig einen zugehörigen Referenzwert der Masse $m_*(T_1)$ zuordnen zu können. Um dies gewährleisten zu können, ist in einem Temperaturbereich um die Zieltemperatur $T_1$ der Betrag der Ableitung $dm_*(T_1)/dT_1$ des Referenzwert der Masse $m_*(T_1)$ nach der Zieltemperatur $T_1$ grösser als der Quotient aus der Massentoleranz $G_m$ der Wägevorrichtung und der Temperaturtoleranz $G_T$ der Zieltemperatur $T_1$.

Anstelle des Absolutbetrags der Referenzmasse $m_*(T_1)$, kann auch die relative Änderung der Referenzmasse $X_*(T_1)$ bzw. die relative Änderung der Masse nach dem Messvorgang $X(T_1)$ betrachtet werden. Die relative Änderung der Referenzmasse $X_*(T_1)$ definiert sich aus der Ausgangsmasse $m_0$ und dem Referenzwert der Masse $m_*(T_1)$:

$$X_*(T_1) = \frac{m_o - m_*(T_1)}{m_o}$$

Die relative Änderung der Masse nach dem Messvorgang $X(T_1)$ definiert sich aus der Ausgangsmasse $m_0$ und der Masse nach dem Messvorgang $m_1$:

$$X(T_1) = \frac{m_o - m_1}{m_o}.$$

Um gewährleisten zu können, dass jeder Zieltemperatur $T_1$ eindeutig ein $X_*(T_1)$ zugeordnet werden kann, ist der Betrag der Ableitung der relativen Änderung der Referenzmasse $X_*(T_1)$ nach der Zieltemperatur $T_1$ grösser als der Quotient aus der relativen Massentoleranz $G_X$ der Wägevorrichtung und der Temperaturtoleranz $G_T$ der Zieltemperatur $T_1$.

Für Messgeräte mit einer Temperaturtoleranz von $G_T$ =3˚C und einer relativen Massentoleranz von $G_X$ = 0.1% muss folglich der Betrag der Ableitung der relativen Änderung der Referenzmasse $X_*(T_1)$ nach der Zieltemperatur $T_1$ grösser als $\alpha = \frac{G_X}{G_T} \approx 0.033 \frac{\%}{^oC}$

sein. Diese Bedingung gilt mindestens in einem die Zieltemperatur $T_1$ umgebenden Temperaturbereich. Üblicherweise genügt es wenn diese Bedingung in einem Intervall von $\pm 10°C$ um den Wert der Zieltemperatur $T_1$ erfüllt ist. Idealerweise wird das Messgerät mit einer Zieltemperatur $T_1$ überprüft, die möglichst nahe der Temperatur liegt bei der das Messgerät betrieben wird. Üblicherweise werden vorgängig beschriebene Messgeräte in einem Bereich der Zieltemperatur von $80°C$ bis $200°C$ betrieben. Es ist deshalb vorteilhaft eine Testprobe zu verwenden, die auch diesen gesamten Bereich der Zieltemperatur abdeckt. Somit ist mit Vorteil der Betrag der Ableitung der relativen Änderung der Referenzmasse $X_*$ ($T_1$) nach der Zieltemperatur $T_1$ im Temperaturbereich von $80°C$ bis $200°C$ grösser als

$$\alpha = \frac{G_X}{G_T} = 0.033 \frac{\%}{{}^oC}.$$

Dies bietet den Vorteil, dass die gleiche Testprobe für die Überprüfung für jede Zieltemperatur $T_1$ benutzt werden kann.

Je grösser der Wert $\alpha$ ist, desto genauer ist das Prüfverfahren. Es ist deshalb vorteilhaft wenn Systemkomponenten und insbesondere das Material der Testprobe so gewählt sind, dass $\alpha > 0.1$ oder noch besser $\alpha > 0.3$ in einem Temperaturbereich von $80°C$ bis $200°C$ ist.

Das Material der Testprobe weist eine Prüfsubstanz auf. Unterschiedliche Substanzen und Substanzmischungen sind als Prüfsubstanz geeignet, solange diese unter Temperatureinfluss eine kontrollierte Massenänderung erfahren. Eine derartige Massenänderung kann Folge einer chemischen oder physikalischen Reaktion sein, bei der die Prüfsubstanz sich beispielsweise zersetzt, umwandelt, den Aggregatzustand ändert oder eine weitere gebundene oder eingeschlossene Substanz, wie Kristallwasser, Gaseinschlüsse oder absorbierte Lösungsmittel, abgibt. Selbstverständlich können auch flüchtige Substanzen eingesetzt werden, welche beispielsweise einen Siedepunkt von mindestens $20°C$ oberhalb der Raumtemperatur haben, damit diese ohne Masseverlust gelagert werden können. Vorzugsweise werden die Ausgangsmasse $m_0$ der Testprobe und die Zieltemperatur $T_1$ derart gewählt, dass nach dem vordefinierten Zeitintervall $\Delta t$ ein Rest der Prüfsubstanz verbleibt. Falls die Prüfsubstanz vor Ablauf des Zeitintervalls $\Delta t$ vollständig umgesetzt oder verbraucht wäre, kann keine weitere Massenreduktion der Prüfsubstanz erfolgen und folglich könnte keine Aussage über die Genauigkeit des Messgeräts getroffen werden.

Neben Einzelsubstanzen können selbstverständlich auch Mischungen solcher Substanzen als Prüfsubstanz eingesetzt werden.

Eine Prüfsubstanz kann mit einem Trägermaterial kombiniert werden. Grundvoraussetzung des Trägermaterials ist, dass es im Temperaturbereich von $40°C$ bis $230°C$ eine konstante Masse aufweist. Vorteilhafterweise ist dieses Trägermaterial hitzebeständig und verändert sich in dem zuvor angegebenen Temperaturbereich nicht.

Eine weitere vorteilhafte Eigenschaft des Trägermaterials ist die gleichmässige Verteilung der Prüfsubstanz auf der Probenaufnahme, was einen positiven Einfluss auf die reproduzierbare Masseänderung unter Wärmeeinwirkung hat.

Als Trägermaterialien eignen sich insbesondere Strukturen, welche die Prüfsubstanz aufnehmen und zumindest zeitweise binden können. Solche Strukturen können Festkörper, Gele, Pulver oder Granulate aufweisen. Besonders geeignet sind poröse Adsorber oder Absorber aus keramischen oder textilen Verbindungen. Als textile Verbindungen können insbesondere Vliesstoffe oder Mikrofaserprodukte dienen. Weitere mögliche geeignete Trägermaterialien umfassen unter anderem Zeolithe, Aktivkohle, Polymere, Silikagele, Quarzverbindungen, beispielsweise Sand oder Mischungen daraus.

Zeolithe sind besonders vorteilhaft, da sie aufgrund ihrer mikroporösen Struktur eine hohe Aufnahmekapazität für eine geeignete Prüfsubstanz, wie beispielsweise Wasser, haben. Die Porengrösse eines Zeoliths ist über dessen Kristallstruktur definiert, wodurch die Verteilung der Porengrösse eng ist. Zeolithe sind dafür bekannt, dass sie reversibel Wasser binden können, welches bei einer Temperaturerhöhung kontinuierlich abgegeben wird. Die Wasserabgabe des Zeoliths ist stark temperatursensitiv, was zu einer betragsmässig grossen Ableitung der Masse nach der Temperatur $dm/dT$ führt. Ein weiterer Vorteil von Zeolithen ist, dass diese sowohl chemisch und als auch physikalisch sehr stabil sind und sich zudem im betrachteten Temperaturbereich nicht zersetzen.

Die meisten bevorzugten Trägermaterialien verändern ihre Form im verwendeten Temperaturbereich nicht. Es ist jedoch auch denkbar Trägermaterialien zu verwenden, die bei gleichbleibender Masse temperaturabhängig, beispielsweise vor Erreichen der Zieltemperatur, ihre Struktur oder Form ändern und dadurch die Prüfsubstanz freisetzen. In einer möglichen Ausgestaltung wird beispielsweise eine temperatursensitive Prüfsubstanz in einem schmelzbaren Wachs eingeschlossen. Auf diese Weise ist bei der Lagerung der Testprobe die Prüfsubstanz im Wachs eingeschlossen und kann sich nicht verändern oder verflüchtigen. Wird die Testprobe bei der Überprüfung des Messgeräts erhitzt, schmilzt das Wachs und die Prüfsubstanz wird freigesetzt. Diese Ausgestaltung bietet Vorteile bei der Lagerung der Testprobe, da die temperatursensitive Prüfsubstanz nicht schon bei der Lagerung, sondern erst während ihres Einsatzes zur Überprüfung des Messgeräts freigesetzt wird.

Als temperatursensitive Prüfsubstanzen können Flüssigkeiten oder Lösungen verwendet werden, wobei die Prüfsubstanz beispielsweise azeotrope Gemische, Wasser, Salzlösungen, organische Lösungsmittel, Lösungsmittelgemische und/oder Mischungen daraus enthalten könnten. Die temperatursensitiven Substanzen weisen einen gut definierten Siedebereich auf. Die Auswahl der temperatursensitiven Prüfsubstanz sollte in Abhängigkeit ihres Siedepunkts und der zu überprüfenden Temperatur oder des Temperaturbereichs erfolgen. Der Siedepunkt kann dadurch verändert werden, indem Mischungen von Substanzen mit unterschiedlichen Siedepunkten als Prüfsubstanz verwendet werden. Auch durch den Zusatz von weiteren Substanzen kann der Siedepunkt der Prüfsubstanz verändert werden. Insbesondere sind Substanzen, welches in einem Bereich von $80°C$ bis $200°C$ eine mit einem Gewichtsverlust verbundene chemische oder physikalische Veränderung erfahren, als Prüfsubstanzen geeignet.

Vorteilhafterweise wird für die Überprüfung des Messgeräts möglichst wenig Zeit benötigt. Auf der anderen Seite muss jedoch die Masse der Testprobe genügend gross sein um ein hinreichend genaues Ergebnis zu liefern. Versuche haben gezeigt, dass für eine Ausgangsmasse von ca. $1g$ bis $20g$ ein vordefiniertes Zeitintervall im Bereich von $\Delta t = 300s$ bis $\Delta t = 900s$ ausreichend ist.

Die Ausgangsmasse der Testprobe $m_0$ setzt sich aus der Masse der Prüfsubstanz $m_{prüf}$ und der Masse des Trägermaterials $m_{Träger}$ zusammen:

$$m_0 = m_{prüf} + m_{Träger}$$

Ein Beispiel für ein Messgerät zur gravimetrischen Feuchtigkeitsbestimmung und typische Temperatur-Massenverläufe sind in den folgenden Figuren dargestellt. Es zeigen:

Figur 1　　einen Schnitt durch ein Messgerät zur gravimetrischen Feuchtigkeitsbestimmung,

Figur 2a　　einen typischen Temperatur-Massenverlauf für Natriumtartrat-Dihydrat, wobei Natriumtartrat-Dihydrat eine bereits aus dem Stand der Technik bekannte Prüfsubstanz ist und

Figur 2b　　zum Vergleich einen Temperatur-Massenverlauf für zwei erfindungsgemässe Prüfsubstanzen.

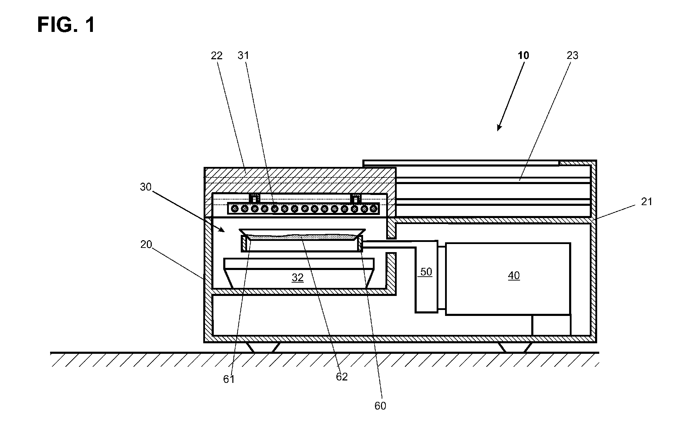

Figur 1 zeigt einen Schnitt durch ein typisches Messgerät 10 zur gravimetrischen Feuchtemessung mit einer Probenaufnahme 60 und einer Probenschale 61 zur Aufnahme einer Probe. Die Probenaufnahme 60 ist über ein Verbindungsglied 50 mit einer Wägevorrichtung 40 verbunden. Die Wägevorrichtung 40 dient der Bestimmung der Masse der Probe.

Die Probenaufnahme 60 befindet sich in einem Prüfraum 30, der mit Hilfe von mindestens einer ersten Strahlungsquelle 31 erwärmt werden kann. Optional kann die Probe zusätzlich mit einer zweiten Strahlungsquelle 32 erwärmt werden. Idealerweise befindet sich die erste Strahlungsquelle 31 oberhalb der Probe und die zweite Strahlungsquelle 32 unterhalb der Probe. Befindet sich die Probe zwischen den beiden Strahlungsquellen 31, 32, wird dadurch eine gleichmässige Erwärmung der Probe sicher gestellt. Als Strahlungsquellen 31, 32 können beispielsweise eine Heizplatte, eine Heizfolie, ein Heizstrahler, ein Keramikstrahler, eine Induktionsspule, eine Halogen- oder eine Quarzlampe eingesetzt werden.

Das Messgerät 10 ist in einem Gehäuse 20 untergebracht. Das Gehäuse 20 besteht aus einem feststehenden 21 und einem beweglichen 22 Gehäuseteil. Der bewegliche Gehäuseteil 22 kann auf Führungsschienen 23 verschoben werden. Durch Verschieben des beweglichen Gehäuseteils 22 wird der Prüfraum 30 geöffnet und es kann eine Probe 62 auf die Probenaufnahme 60 gebracht werden, oder von dieser entfernt werden.

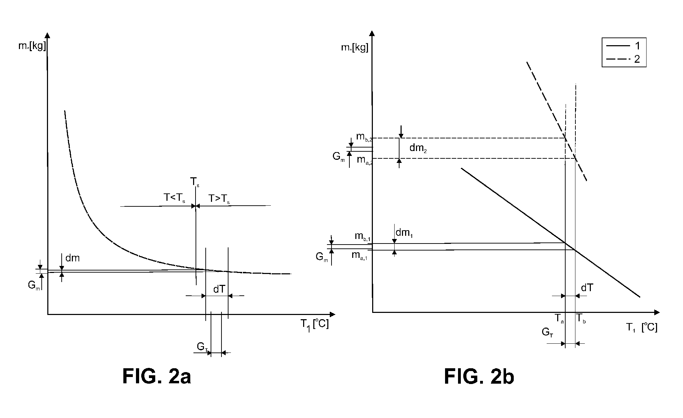

Die Figuren 2a und 2b stellen Temperatur-Massenverläufe dar. Dabei ist auf der horizontalen Achse die Zieltemperatur $T_1$ und auf der vertikalen Achse die daraus nach einem vordefinierten konstanten Zeitintervall $\Delta t$ resultierende zu erwartende Referenzmasse $m_*(T_1)$ aufgetragen. Prinzipiell führt eine höhere Zieltemperatur $T_1$ zu einem grösserem Massenverlust und somit zu einer kleineren Referenzmasse $m_*(T_1)$.

In Figur 2a ist schematisch ein typischer Temperatur-Massenverlauf für Natriumtartrat-Dihydrat dargestellt. Natriumtartrat-Dihydrat ist eine aus dem Stand der Technik bekannte Prüfsubstanz.

Bei Temperaturen grösser als dem Temperaturschwellwert $T_S$ weist der Graph eine kleine Steigung auf. Selbst Zieltemperaturen, die weiter als die Temperaturtoleranz $G_T$ auseinander liegen, führen zu Massen, die innerhalb der Massentoleranz $G_M$ der Wägevorrichtung (40) liegen. Somit kann keine Aussage über die Genauigkeit des Messgeräts getroffen werden.

Auch für Verwendung unterhalb des Temperaturschwellwertes $T_S$ ist Natriumtartrat-Dihydrat ungeeignet, da in diesem Bereich, wie eingangs erwähnt, der Masse-Temperaturverlauf nicht ausreichend genau reproduzierbar ist und daher für eine präzise Überprüfung des Messgeräts ebenfalls ungeeignet ist.

Figur 2b zeigt zwei Graphen mit jeweils einem exemplarischen Temperatur-Massenverlauf für zwei unterschiedliche erfindungsgemässe Prüfsubstanzen. Die beiden Graphen unterscheiden sich durch eine unterschiedliche Steigung des Temperatur-Massenverlaufs. Die Steigung des Temperatur-Massenverlaufs wird durch die Ableitung der Masse nach der Temperatur, $dm/dT$, wiedergegeben. Aus den beiden Graphen 1 und 2 geht hervor, dass falls betragsmässig die Ableitung der Masse nach der Temperatur grösser als der Quotient aus dem Temperaturtoleranz $G_T$ und der Massentoleranz $G_m$, das heisst $dm/dT > G_m / G_T$, so kann für zwei

unterschiedliche Zieltemperaturen $T_a$ bzw. $T_b$, die mindestens durch die Temperaturtoleranz $G_T$ voneinander beabstandet sind, jeweils ein Referenzwert der Masse $m_{a,1}$ bzw. $m_{b,1}$ zugeordnet werden. Dabei sind die beiden Massen $m_{a,1}$ und $m_{b,1}$ weiter als die Massentoleranz $G_m$ voneinander beabstandet. Dadurch wird sichergestellt, dass sich die beiden Massen $m_{a,1}$ und $m_{b,1}$ nicht innerhalb der Massentoleranz $G_m$ befinden und es kann eine präzise Aussage über das Messgerät gemacht werden.

Je grösser der Gradient $dm/dT$ ist, desto genauer ist dabei das Verfahren. Dies wird durch einen Vergleich der Graphen 1 und 2 veranschaulicht. Graph 2 weist eine grössere Steigung als Graph 1 auf. Daraus resultiert, dass für betragsmässig grössere Gradienten $dm/dT$ bei zwei unterschiedlichen Zieltemperaturen $T_a$ bzw. $T_b$ die Referenzwerte der Masse $m_{a,2}$ und $m_{b,2}$ weiter auseinander liegen. Dadurch ist eine präzisere Aussage über die Genauigkeit des Messgeräts möglich ist.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten ausgetauscht werden.

Insbesondere ist das erfindungsgemässe Verfahren nicht auf die Verwendung des beschriebenen Messgeräts (10) beschränkt. Es kann bei den meisten handelsüblichen gravimetrischen Messgeräten zur Feuchtigkeitsbestimmung verwendet werden.

Bezugszeichenliste

| | |
|---|---|
| 10 | Messgerät |
| 19 | Führungsschiene |
| 20 | Gehäuse |
| 21 | Feststehendes Gehäuseteil |
| 22 | Bewegliches Gehäuseteil |
| 23 | Führungsschiene |
| 30 | Prüfraum |
| 31 | Erste Strahlungsquelle |
| 32 | Zweite Strahlungsquelle |
| 40 | Wägevorrichtung |
| 50 | Verbindungsglied |
| 60 | Probenaufnahme |
| 61 | Probenschale |
| 62 | Testprobe |

Liste der verwendeten Symbole:

| | | |
|---|---|---|
| $a$ | Vordefinierter Schwellwert der Massenänderung pro Zeiteinheit [$kg/s$] | |
| $G_m$ | Massentoleranz [$kg$] | |
| $G_T$ | Temperaturtoleranz [$^\circ C$] | |
| $G_X$ | Relative Massentoleranz [-] | |
| $m$ | Masse [$kg$] | |
| $m_{prüf}$ | Masse der Prüfsubstanz [$kg$] | |
| $m_{Träger}$ | Masse des Trägermaterials [$kg$] | |
| $m_*$ | Referenzwert der Masse [$kg$] | |
| $m_0$ | Ausgangsmasse [$kg$] | |
| $m_1$ | Masse nach dem Erhitzen des Prüfraums mittels eines vordefinierten Temperaturprofils [$kg$] | |
| $\Delta t$ | Vordefiniertes Zeitintervall [$s$] | |
| $T$ | Temperatur [$^\circ C$] | |
| $T_0$ | Ausgangstemperatur [$^\circ C$] | |
| $T_1$ | Zieltemperatur [$^\circ C$] | |
| $T_S$ | Temperaturschwellwert [$^\circ C$] | |
| $X_* = (m_o - m^*)/m_o$ | Relativer Änderung der Referenzmasse [-] | |
| $X = (m_o - m_1)/m_o$ | Relativer Änderung der Masse [-] | |
| $\alpha$ | Ableitung des relativen Massenverlusts $X$ nach der Zieltemperatur | |

**Patentansprüche**

1. Verfahren zur Überprüfung eines Messgeräts (10), zur gravimetrischen Feuchtigkeitsbestimmung, wobei das Messgerät (10) einen Prüfraum (30), eine Wägevorrichtung (40) mit einer Probeaufnahme (60) zur Bestimmung der Masse der Probe (62), die sich in Messstellung im Prüfraum (30) befindet und mindestens ein Mittel zur Erwärmung (31) der auf der Probenaufnahme (60) auflegbaren Probe (62) aufweist, wobei das Verfahren die folgenden Schritte aufweist:

   - Aufbringen einer Testprobe (62) auf die Probenaufnahme (60),
   - Bestimmung der Ausgangsmasse $m_0$ der Testprobe (62),
   - Erhitzen des Prüfraums (30) mittels eines vordefinierten Temperaturprofils,
   - Messung der Masse $m_1$ der Testprobe mit Hilfe der Wägevorrichtung (40) nachdem die Testprobe (62) mittels des vordefinierten Temperaturprofils erhitzt wurde,
   - Vergleich der gemessenen Masse $m_1$ mit einem Referenzwert der Masse $m_*$ und
   - Ausgabe eines zum Resultat des Vergleichs korrespondierenden Signals.

2. Verfahren nach Anspruch 1, **dadurch gekennzeichnet, dass** das vordefinierte Temperaturprofil Erhitzen auf eine vordefinierte Zieltemperatur $T_1$ und Halten dieser Zieltemperatur $T_1$ entweder während eines vordefinierten Zeitintervalls $\Delta t$ oder bis die Massenänderung pro Zeiteinheit einen vordefinierten Wert unterschreitet, d.h. $\dot{m} \leq a$, umfasst.

**3.** Verfahren nach Anspruch 1 oder 2, **dadurch gekennzeichnet, dass** sich das korrespondierende Signal aus der Differenz des Referenzwerts der Masse $m_*$ und der gemessenen Masse $m_1$ ergibt.

**4.** Testprobe zur Überprüfung eines Messgeräts (10) in einem Verfahren nach einem der Ansprüche 1 bis 3.

**5.** Testprobe nach Anspruch 4, **dadurch gekennzeichnet, dass** die Testprobe (62) eine Prüfsubstanz aufweist, die durch das Erhitzen reproduzierbar ihre Masse ändert.

**6.** Testprobe nach Anspruch 4 oder 5, **dadurch gekennzeichnet, dass** das Material der Testprobe so gewählt ist, dass in einem Temperaturbereich um die Zieltemperatur $T_1$ der Betrag der Ableitung $dm_*(T_1)/dT_1$ des Referenzwert der Masse $m_*(T_1)$ nach der Zieltemperatur $T_1$ größer als der Quotient aus der Massentoleranz $G_m$ der Wägevorrichtung und der Temperaturtoleranz $G_T$ der Zieltemperatur $T_1$ ist.

**7.** Testprobe nach Anspruch 4 oder 5, **dadurch gekennzeichnet, dass** das Material der Testprobe so gewählt ist, dass der Betrag der Ableitung der relativen Änderung der Referenzmasse $X_*(T_1)$ nach der Zieltemperatur $T_1$ größer als der Quotient aus der relativen Massentoleranz $G_X$ der Wägevorrichtung und der Temperaturtoleranz $G_T$ der Zieltemperatur $T_1$ ist.

**8.** Testprobe nach Anspruch 7, **dadurch gekennzeichnet, dass** das Material der Testprobe (62) so gewählt ist, dass nach dem vordefinierten Zeitintervall $\Delta t$ oder nach Unterschreiten der Massenänderung pro Zeiteinheit der Referenzwert der Masse $m_*(T_1)$, derart von der Zieltemperatur $T_1$ abhängig ist, dass in einem Temperaturbereich von $T_1 \pm 10\,°C$ um die Zieltemperatur $T_1$ der Betrag der Ableitung des relativen Massenverlusts $X(T_1) = (m_o - m_*(T1))/m_o$ nach der Zieltemperatur $T_1$ grösser als $\alpha = 0.033\%/°C$ ist.

**9.** Testprobe nach Anspruch 8, **dadurch gekennzeichnet, dass** die Ableitung des Referenzwerts des relativen Massenverlusts $X(T_1)_= (m_o - m_*(T_1)/m_o$ nach der Zieltemperatur $T_1$ in einem Temperaturbereich von $T_1 = 80\,°C$ bis $200\,°C$ grösser als $\alpha = 0.1\%/°C$ ist, insbesondere der Betrag der Ableitung des Referenzwert des relativen Massenverlusts $X(T_1) = (m_o - m_*(T_1))/m_o$ nach der Zieltemperatur $T_1$ in einem Temperaturbereich von $T_1 = 80\,°C$ bis $200\,°C$ grösser als $\alpha = 0.3\%/°C$ ist.

**10.** Testprobe nach einem der Ansprüche 4 bis 9, **dadurch gekennzeichnet, dass** die Prüfsubstanz eine Substanz oder Substanzgemisch aufweist, welches in einem Bereich von $80\,°C$ bis $200\,°C$ eine mit einem Gewichtsverlust verbundene chemische oder physikalische Veränderung erfährt.

**11.** Testprobe nach einem der Ansprüche 4 bis 10, **dadurch gekennzeichnet, dass** die Prüfsubstanz eine Flüssigkeit oder eine Lösung ist, wobei die Prüfsubstanz insbesondere Wasser, organische Lösungsmittel, Lösungsmittelgemische und/oder Mischungen daraus umfasst.

**12.** Testprobe nach einem der Ansprüche 4 bis 11, **dadurch gekennzeichnet, dass** die Testprobe (62) eine Prüfsubstanz aufweist, deren Masse sich temperaturabhängig auf Grund von mindestens einer chemischen Reaktion verändert.

**13.** Testprobe nach einem der Ansprüche 4 bis 12, **dadurch gekennzeichnet, dass** die Testprobe (62) ein Trägermaterial enthält, das die Form eines Wachses, Festkörpers, Gels, Pulvers und/oder Granulats aufweist und/oder das Trägermaterial temperaturabhängig bei gleichbleibender Masse eine Form- oder Strukturänderung erfährt.

**14.** Testprobe nach Anspruch 13, **dadurch gekennzeichnet, dass** das Trägermaterial ein im Temperaturbereich von $40\,°C$ bis $230\,°C$ chemisch und physikalisch stabiles ist.

**15.** Testprobe nach Anspruch 13 oder 14, **dadurch gekennzeichnet, dass** das Trägermaterial ein Zeolith, eine Aktivkohle, ein Polymer und/oder ein Silikagel enthält.

**FIG. 1**

FIG. 2a

FIG. 2b

Europäisches
Patentamt

European
Patent Office

Office européen
des brevets

**EUROPÄISCHER RECHERCHENBERICHT**

Nummer der Anmeldung

EP 09 15 8085

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/063128 A1 (REVESZ ROBERT N [US] ET AL REVESZ ROBERT N [US] ET AL) 30. Mai 2002 (2002-05-30) * Absätze [0003], [0032], [0048], [0049], [0052] * ----- | 1-15 | INV. G01N5/04 |
| X | WO 99/61878 A (DENVER INSTR CO [US]; SCALESE ROBERT F [US]; TAYLOR THOMAS B [US]; HOL) 2. Dezember 1999 (1999-12-02) * Seite 35, Zeile 11 - Seite 36, Zeile 17 * * Seite 44, Zeile 10 - Seite 45, Zeile 14 * ----- | 1-15 | |
| X | US 5 085 527 A (GILBERT PAUL A [US]) 4. Februar 1992 (1992-02-04) * Zusammenfassung * * Spalte 3, Zeile 62 - Spalte 4, Zeile 17 * * Spalte 4, Zeile 65 - Spalte 5, Zeile 17 * ----- | 1-15 | |

RECHERCHIERTE SACHGEBIETE (IPC)

G01D

Der vorliegende Recherchenbericht wurde für alle Patentansprüche erstellt

| Recherchenort | Abschlußdatum der Recherche | Prüfer |
|---|---|---|
| Den Haag | 19. August 2009 | van Lith, Joris |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 15 8085

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-08-2009

| Im Recherchenbericht angeführtes Patentdokument | Datum der Veröffentlichung | Mitglied(er) der Patentfamilie | Datum der Veröffentlichung |
|---|---|---|---|
| US 2002063128 A1 | 30-05-2002 | AU 7523701 A<br>CA 2413236 A1<br>EP 1297327 A2<br>JP 2004502169 T<br>WO 0201212 A2<br>US 6566637 B1 | 08-01-2002<br>03-01-2002<br>02-04-2003<br>22-01-2004<br>03-01-2002<br>20-05-2003 |
| WO 9961878 A | 02-12-1999 | AU 4185499 A<br>US 6247246 B1<br>US 2002035792 A1 | 13-12-1999<br>19-06-2001<br>28-03-2002 |
| US 5085527 A | 04-02-1992 | KEINE | |

Für nähere Einzelheiten zu diesem Anhang : siehe Amtsblatt des Europäischen Patentamts, Nr.12/82

EPO FORM P0461

**EP 2 241 874 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0611956 B1
- EP 1850110 A1
- DE 10024015 C2